# EUROPEAN PATENT SPECIFICATION

(11) **EP 3 900 236 B1**
(45) Date of publication and mention of the grant of the patent: **28.02.2024**
(21) Application number: 19700493.0
(22) Date of filing: 11.01.2019
(51) Int. Cl.: H04J 11/00

(54) **INTERFERENCE CANCELLATION FOR NSSS DETECTION**
INTERFERENZUNTERDRÜCKUNG FÜR NSSS-DETEKTION
ANNULATION DE BROUILLAGE POUR DÉTECTION NSSS

(43) Date of publication of application: 27.10.2021
(73) Proprietor: Huawei Technologies Co., Ltd., Longgang District, Shenzhen, Guangdong 518129 (CN)
(72) Inventor: POPESCU, Andrei, 80992 Munich (DE); YU, Chunyang, 80992 Munich (DE)
(74) Representative: Epping - Hermann - Fischer
(86) International application number: PCT/EP2019/050699
(87) International publication number: WO 2020/143922

(56) References cited:
- WO-A1-2017/136003
- US-A1- 2002 154 717
- US-A1- 2013 336 193
- US-A1- 2016 006 528
- US-A1- 2016 242 103
- US-A1- 2018 063 744
- US-A1- 2018 160 363
- US-A1- 2018 213 495

## Description

### FIELD OF THE INVENTION

This invention relates to methods for improving Narrowband Secondary Synchronization Signal detection performance.

### BACKGROUND

In current cell search procedures within narrowband Internet of Things (NB-loT) networks, after carrier frequency offset (CFO) and timing acquisition using a Narrowband Primary Synchronisation Signal (NPSS), a Narrowband Secondary Synchronization Signal (NSSS) is used to decode the cell ID and frame number. When multiple cells are present, and when the signals are relatively strong, false cells may be detected during cell search.

Narrowband Physical Broadcast Channel (NPBCH) decoding can be subsequently used to reject false cell detections using a cyclic redundancy check (CRC). However, this can result in an unnecessarily long processing delay and increased power consumption. In the meantime, weak cells may not be detected due to interference from a strong cell or cells.

In conventional NSSS detection, using frequency domain cross-correlation and non-coherent integration, thresholds are determined relative to a detection metric. The detection metric is typically based on the correlation of each of the possible transmitted signals with the received signal.

There is often a trade-off between minimising false detections and sensitivity performance when setting the threshold. If the threshold is set low for wide coverage, this can cause excessive false detections, especially when the received signal is relatively strong. On the other hand, if the threshold is set high to remove false detections, this can degrade sensitivity performance, thus reducing coverage.

Furthermore, in a multiple/synchronous cell scenario, interference from stronger cells masks the metric of weaker cells.

Where an NB-loT (narrowband Internet of Things) device receives signals from different cells and the frame structure of these signals is synchronous (or near-synchronous), the NSSS signals from the different cells overlap within the received signal. It is this scenario that the present invention addresses.

In current practice the different cells of an NB-loT network may not be required to be synchronized. However, situations can arise where different cells are synchronized due to implementation-specific conditions, for instance where multiple cells are served by a single base station, or by collocated base stations.

It is desirable to handle the scenario of multiple near-synchronous cells with different cell IDs using a technique that retains sensitivity whilst reducing false cell detection.

SIC is a known technique in wireless communications. It typically may be used in receivers that receive simultaneously signals from multiple transmitters (and/or from multiple antennas of a transmitter). For example, SIC can be used in code-division multiple access (CDMA) systems for multi-user detection (MUD). It can also be used in multiple-input multiple-output (MIMO) systems to detect multiple data streams from one or more transmitters.

In known applications, the multiple signals to be identified by the receiver are modulated by data and the goal of the SIC is to recover the data from a received signal in the presence of the interference from the other signals. The channel between the transmitter and the receiver is typically estimated separately from the SIC procedure.

In some scenarios, at the time of NSSS detection the channel between each transmitter and the receiver is not known and there is a need to determine the presence or absence in the received signal of transmitted NSSS signals belonging to a fixed set, as altered by the unknown channels.

It would be desirable to have an improved technique for detecting signals such as synchronization signals.

US 2016/242103 A1 discloses an orthogonal frequency division multiplexing (OFDM) receiver and a method of operating the receiver for performing a cell search. A coarse correlator block is provided to detect one cell out of a by plurality of wireless communication cells by determining first correlation metric values by applying a partial correlation comprising part-wise correlating sample data with each one of a first set of phase-rotated reference sequences and non-coherent combining. The maximum of the first correlation values yields to a cell identifier value. A fine correlator block is provided to estimate a fine time offset value for the one wireless communication cell by determining second correlation values by applying a correlation comprising correlating the he sample data with each one of a second set of phase-rotated reference sequences. The maximum of the second correlation values value yields to a fine time offset.

US 2018/160363 A1 discloses an apparatus for a transceiver of a mobile communication system, which includes an interface configured to obtain receive signal information. The apparatus further includes a control module configured to determine a first cell identifying information of the mobile communication system based on the receive signal information, and configured to estimate an interfering signal information transmitted by a second cell of the mobile communication system based on the receive signal information. The interfering signal comprises control or payload data information of a second transceiver. The control module is further configured to detect a synchronization signal information transmitted for the cell based on the receive signal information and the interfering signal information. The control module is further configured to identify the first cell identifying information based on the synchronization signal information.

US 2016/006528 A1 discloses a method of a wireless communication device for a cellular communication system. According to the method, a signal comprising a first known signal sequence and a second known signal sequence for each of one or more first cells of the cellular communication system is received, and the first and second known signal sequences of each of the one or more first cells are detected based on the received signal. For at least one of the one or more first cells, one of the first known signal sequence, the second known signal sequence, and a combination of the first and second known signal sequences is selected for channel estimation. The selection is based on the detected first and second known signal sequences of the one or more cells. Channel estimation of the at least one of the one or more first cells is performed based on the signal sequence selection. In some examples, the method may further comprise performing interference cancellation of at least one of the first and second known signal sequences of the at least one of the one or more first cells based on the channel estimation and detecting one or more second cells of the cellular communication system after the interference cancellation. Corresponding computer program product, arrangement and wireless communication device are also disclosed.

US 2018/213495 A1 discloses a method and apparatus for performing, by a terminal, time and frequency synchronization with a base station in an initial access process to the base station. The method includes receiving, by the terminal, a physical broadcast channel, and detecting a synchronization signal based on the received physical broadcast channel.

WO 2017/136003 A1 discloses devices and methods of enhancing narrowband communications. NPSS and NSSS are modulated to include an additional bit that indicates a duplexing scheme, a raster frequency offset (zero or non-zero), an operating mode (in-band or standalone/guard-band) or frame timing used by the eNB. The NPSS modulation uses conjugate ZC sequences multiplied by a cover code for each OFDM symbol. The NMIB may provide additional information related to the operating mode or offset. NSSS cyclic shifts may be used to indicate the offset or TDD/FDD use, as may relative locations of the NPSS and NSSS. The NSSS may use symbol-level modulation and time domain cyclic shifts to indicate the frame timing.

### SUMMARY OF THE INVENTION

According to a first aspect there is provided a signal receiver for communicating with one of a plurality of transmitters, the receiver being configured to receive a narrowband Internet of Thins, NB-IoT, signal and to adapt for communication with a transmitter by the steps of: estimating, for each of multiple transmitters, a respective training signal; receiving a segment of signal on a channel; forming a list comprising at least one of the training signals; for each training signal

in that list, estimating the channel response for a signal on the channel from the transmitter associated with that training signal, and thereby estimating a signal on the channel from that transmitter; estimating a processed received signal by cancelling from the received signal a contribution corresponding to the or each training signal; and determining, for a subset of the training signals, the strength of a cross-correlation in the frequency domain between the processed received signal and the respective training signal, wherein the receiver is further configured to determine whether the strength of a cross-correlation in the frequency domain between the received signal and a respective training signal exceeds a threshold comprising determining whether the ratio between: (i) the amplitude of cross-correlation in the frequency domain between the received signal and the respective training signal and (ii) the mean amplitude of cross-correlation in the frequency domain between the received signal and each of the respective training signals exceeds a predetermined threshold.

The segment of signal may be a subframe of the signal.

The receiver may be configured to, if the threshold is exceeded in respect of a training signal, store the identity of the transmitter associated with that training signal.

The receiver may be configured to, if the threshold is exceeded in respect of two of the training signals: a. estimate the channel response of signals on the channel from each transmitter associated with those two training signals, and thereby estimate signals on the channel from those transmitters; b. form the processed received signal by cancelling both the estimated signals from the received signal; and c. determine, for a subset of the training signals, the strength of a cross-correlation in the frequency domain between the processed received signal and the respective training signal.

The receiver may be configured to form the processed received signal by: a. forming a first intermediate processed received signal by cancelling the estimated channel response of a stronger one of the transmitters associated with those two training signals; b. estimating the channel response of signals on the channel from the weaker one of those transmitters in dependence on the first intermediate processed received signal, and thereby estimating a signal on the channel from that transmitter; and c. forming a second intermediate processed received signal by cancelling the estimated signal from the weaker one of the transmitters from the received signal.

The receiver may be configured to treat the second intermediate processed received signal as the said processed received signal.

The receiver may be configured to: a. re-estimate the channel response of signals on the channel from the stronger one of the transmitters in dependence on the second intermediate processed received signal, and thereby re-estimate signals on the channel from those transmitters; and b. form a third intermediate processed received signal by cancelling the re-estimated signals from the received signal; and to treat the third intermediate processed received signal as the said processed received signal. Iterative cancellation may result in improved NSSS detection performance.

The said subset of the training signals may exclude the or each training signals associated with a transmitter in respect of which an estimated signal has been cancelled.

The training signal may be a synchronisation signal. The training signal may be a Narrowband Secondary Synchronisation Signal. This may be used to decode the cell ID and frame number.

The receiver is configured for receiving an NB-loT (narrowband Internet of Things) signal. The technique may therefore be conveniently implemented in current systems.

The receiver may be configured to, having determined, for a subset of the training signals, the strength of a cross-correlation in the frequency domain between the processed received signal and the respective training signal, select in dependence on that determination one of the transmitters associated with the members of the subset and thereupon communicate with that transmitter. In this way, the system may be able to select a preferred transmitter with which to communicate.

The receiver may be configured to perform transmitter detection on the processed received signal by use of a non-coherent integration cross-correlation metric. The technique used by the receiver may therefore be compatible with known methods.

The receiver may be configured to select one of the transmitters in dependence on an output of the metric and to thereupon communicate with that transmitter. In this way, the system may be able to select a preferred transmitter with which to communicate.

The signal receiver may be configured to, for each of the training signals, estimate whether the strength of a cross-correlation between the received signal and the respective training signal exceeds a threshold; and if that threshold is exceeded in respect of a training signal to add that signal to the said list. This may enable relatively strongly received signals to be identified.

The signal receiver may be configured to repeat the steps of estimating the channel response, forming a processed received signal and determining the strength of a cross-correlation, wherein in each repetition after the first the processed received signal is formed by cancelling from the processed received signal formed in the preceding iteration. This iterative approach may improve the accuracy of the technique.

According to a second aspect there is provided a method for operating a signal receiver to communicate with one of a plurality of transmitters as defined by the independent claim 12.

According to a third aspect there is provided a computer program product as defined by independent claim 13.

This may eliminate false detections whilst retaining sensitivity, which in turn reduces processing latency and power consumption, and can increase the detection ratio of weak cells which are covered up by interference from strong cells.

### BRIEF DESCRIPTION OF THE FIGURES

The present invention will now be described by way of example with reference to the accompanying drawings. In the drawings:
Figure 1 shows an example of a system comprising a signal receiver configured to communicate with a plurality of transmitters according to the present invention.
Figure 2 illustrates an example of a process implementable by the system of Figure 1.
Figure 3 shows the results of NSSS detection performance for the TU1Hz channel.
Figure 4 shows the results of NSSS detection performance for the AWGN channel.
Figure 5 shows an example of method for operating a signal receiver according to the present invention.

### DETAILED DESCRIPTION OF THE INVENTION

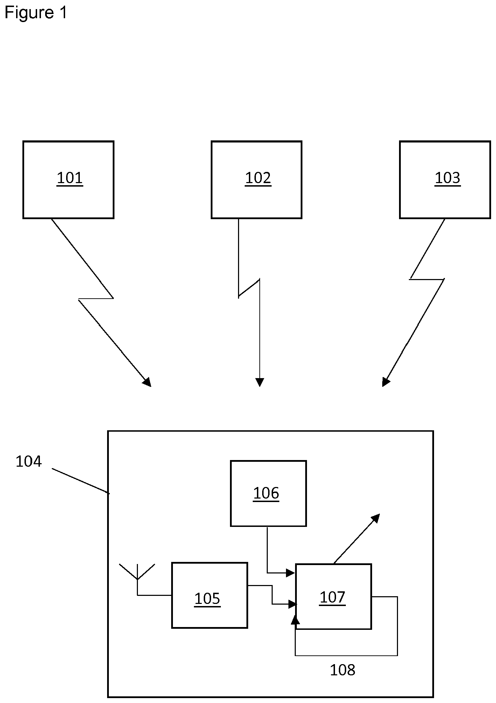

Figure 1 shows a system comprising a signal receiver 104 which is configured to communicate with a plurality of transmitters 101, 102, 103. The signal receiver 104 comprises a radio frequency receiver front end module 105 that is configured to receive signals from the transmitters 101-103. The front end module may, for example, amplify or down-convert a signal that it receives from a transmitter. In this example, the signal receiver is configured to receive a NSSS signal from each transmitter to decode the cell ID and frame number.

The signal receiver 104 also comprises a signal estimator 106. The signal estimator forms, for each of the transmitters 101, 102, 103, a respective estimated NSSS signal.

The signal receiver 104 can receive a subframe worth of signal containing the NSSS signal on a channel from one of the transmitters 101-103 at the front end module 105. Signal estimator 106 can form a list comprising the NSSS signals deemed to be present in the received subframe. For each NSSS signal in that list, the signal estimator can estimate the channel response for a signal on the channel from the transmitter associated with that NSSS signal.

The signal receiver can then form an estimate of the NSSS signal received from a transmitter in the cancellation module 107 by cancelling the estimated NSSS signals from other transmitters from the received signal. The cancellation process may be performed iteratively, as described in further detail below, as shown by arrow 108 in Figure 1.

The signal receiver can then determine the strength of a cross-correlation in the frequency domain between the processed received signal and the respective NSSS signal.

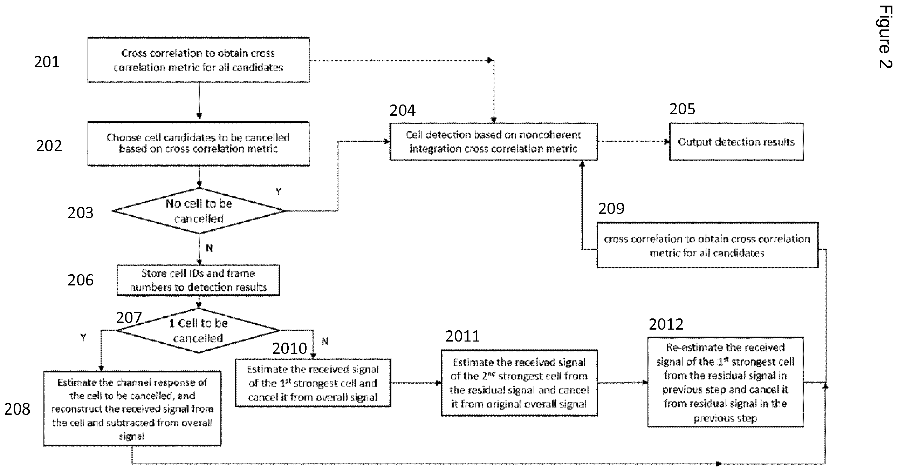

One implementation of the NSSS detection system of Figure 1 is shown in the process flowchart diagram of Figure 2.

The NSSS signals transmitted by the transmitters belong to a finite set of candidates. At step 201, for each received NSSS subframe, the cross-correlation amplitude in the frequency domain with each candidate NSSS signal is calculated. The ratio of each cross-correlation amplitude with respect to the mean cross correlation amplitude over all of the candidates is determined. The ratio for each candidate is then compared with the threshold ratio value that has been set.

At step 202, the cell candidates to be cancelled are chosen based on the cross-correlation metric. If the ratio for the strongest cell is less than the set cancellation threshold, no cancellation will be carried out. If no cells are to be cancelled at step 203, the method proceeds to step 204. In this case, the system will act the same way as it does when using a simple non-coherent integration NSSS detection algorithm and the results are output at step 205. Therefore, in this case, the sensitivity of processing according to this invention is the same as that of processing using simple non-coherent integration.

If the strongest cell ratio is greater than the set cancellation threshold, at least one cell will be cancelled and the method moves to step 206, where the cell IDs and frame numbers are stored to the detection results. At step 207, if the ratio for the strongest cell is much stronger than the second cell or if the ratio for the second cell is small, only the channel response of the strongest cell is estimated at step 208 and the estimated contribution of the strongest cell is subtracted from the overall received signal from the transmitter. The residual signal is used for non-coherent integration detection of other cells at step 209 and the cross-correlation metric is obtained for all cell candidates. Returning to step 204, cell detection is performed for the other cells and the detection results are output at step 205.

If the ratios of the two strongest cells exceed the threshold value and the ratios are close to each other, iterative cancellations are carried in the following way in steps 2010-2012. The received signal of the strongest cell is estimated and its contribution is subtracted from the overall signal in step 2010. The residual signal is then used to estimate the channel of the second strongest cell and its received signal is reconstructed and subtracted from the original signal in step 2011. At step 2012, the strongest cell channel is re-estimated again from the residual signal in step 2011 and its effect is cancelled again from the residual signal. Using this approach, the significant contribution from both of the strongest cells can be eliminated and their mask effect is suppressed significantly. In this case, the cells to be cancelled in each individual frame are very strong, and there is no false detection due to the high threshold.

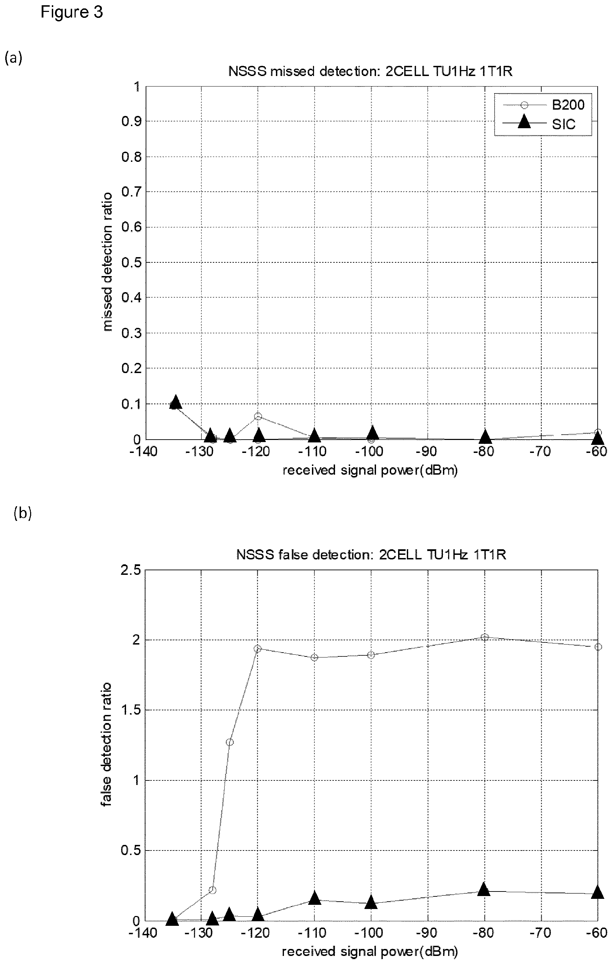

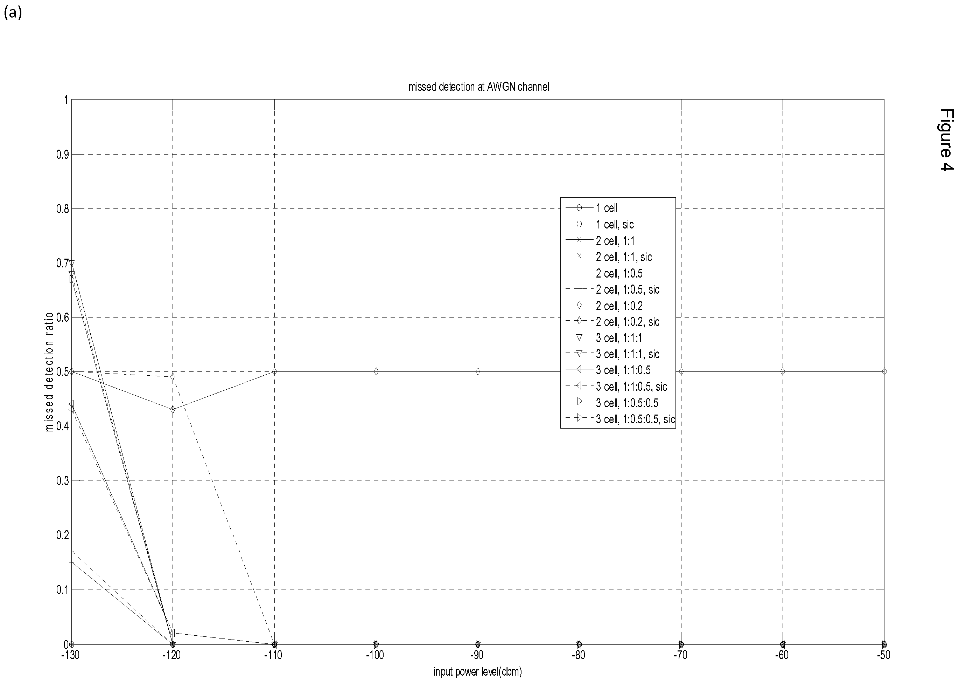

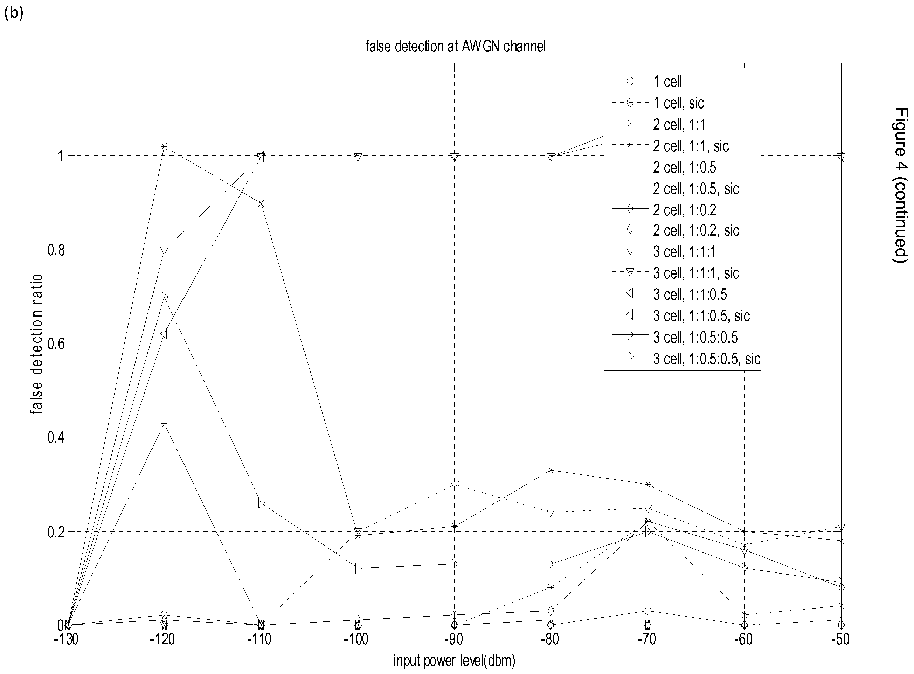

Test results for the technique described herein are presented in terms of missed detection ratio and false detection ratio in Figures 3 and 4.

Figure 3 shows test results for the TU1HZ channel. B200 is the known processing algorithm using simple non-coherent integration and SIC is the proposed algorithm. The missed detection ratio is the ratio of the number of successful cell detections to the total number of cells that should be detected after successful PSS detection. For example, after 100 trials, 99 trials have PSS detections, and the total number of successful cell detections is 160, 2 cells are available, so the missed detection ratio is 1-160/(99*2)=0.1919. The false detection ratio is the ratio of the number of false cell detections to the total number of cells that should be detected after successful PSS detection. In the above case, if the number of false cell detections is 3 per trial, in total there are 297 false cell detections, so the false detection ratio is 297/(2*99)=1.5 Using the SIC approach, sensitivity is retained, whilst false detection is reduced significantly.

Figure 4 shows test results for the AWGN channel. The ratio in the legend is the amplitude ratio for multiple cells. Using interference cancellation can improve detection of weak cells (14dB weaker, compared with the strongest cell) and reduces false detection.

In another implementation of the invention, a successive cancellation procedure is performed as follows.
1. The signal receiver makes an initial assumption about the number of transmitted signals present in the received signal (as altered by their corresponding channels). For example, a transmitted candidate signal may be deemed to be present in the received signal if its correlation with the received signal (prior to any successive cancellation processing) exceeds a threshold.
2. The receiver maintains a table of channel estimates, one for each transmitted signal. Initially the channel estimates may be initialized to zero.
3. The receiver finds the index of each transmitted signal (out of the candidate set) and computes a channel estimate for each of the transmitted signals deemed present by maximizing a correlation between the transmitted signal and the received signal, after first subtracting from the received signal the interference contributions of all the other transmitted signals, the interference corresponding to each transmitted signal being calculated according to its latest channel estimate in the said table.
4. Step 3 is performed iteratively, starting with the transmitted signal deemed to be strongest.
5. The iterative process may be stopped if the channel estimates table ceases to change significantly between iterations.
6. The assumed number of transmitted signals may be increased if a strong enough correlation with an additional transmitted signal is found after removing signal interference due to the transmitted signals previously assumed from the received signal, according to their computed channel estimates.

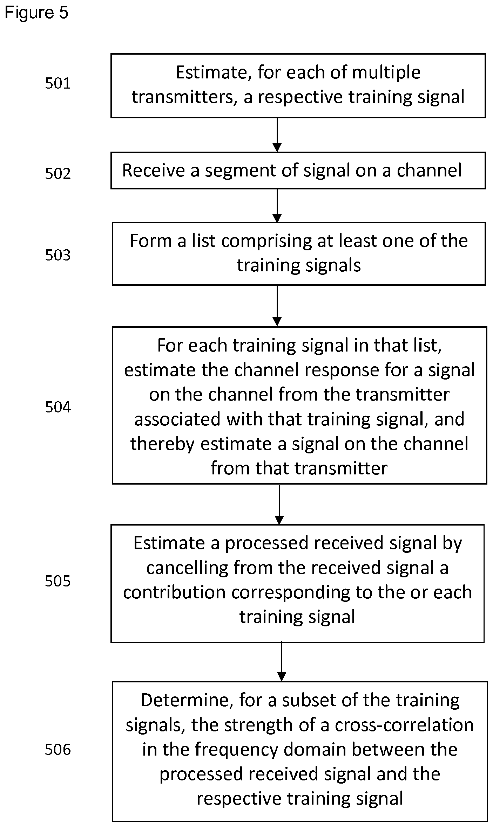

Figure 5 shows the claimed method for operating a signal receiver to communicate with one of a plurality of transmitters in accordance with the present invention. At step 501, the method comprises estimating, for each of multiple transmitters, a respective training signal. Next, at step 502, the method comprises receiving a segment of signal on a channel. At step 503, a list is formed comprising at least one of the training signals. For each training signal in that list, at step 504, the method comprises estimating the channel response for a signal on the channel from the transmitter associated with that training signal, and thereby estimating a signal on the channel from that transmitter. At step 505, the method comprises estimating a processed received signal by cancelling from the received signal a contribution corresponding to the or each training signal. At step 506, the method comprises determining, for a subset of the training signals, the strength of a cross-correlation in the frequency domain between the processed received signal and the respective training signal.

Therefore, in the present invention, successive interference cancellations for two or more strong cells can be applied to improve NSSS detection performance. In summary, this process consists of strong cell detection, cell transmitted NSSS signal regeneration, channel estimation, restoration of the received signal from these cells and finally subtraction from the total received signal. Iterative cancellation results in improved NSSS detection performance.

After the detection of strong cells, the mask effect of these strong cells is greatly removed by subtracting the contribution of the strong cells from the total received signal. For the final cell detection, since most of the interference from strong cells has been removed from the received signal, the peak to mean ratio threshold can be increased to avoid false detection. Therefore, the contribution of weak cells can be more reliably detected. The false cells are filtered out owing to the relatively high threshold after cancellation, which in return leads to reduced processing latency and power consumption. The present technique therefore suppresses excessive false detections and increases weak cell detections.

The proposed algorithm can be conveniently integrated into current NSSS detection methods. After cross-correlation in the frequency domain with all potential candidates, the strongest cells can be selected and successive interference cancellations can be carried out. Those cells to be cancelled are added to the detection results, then another round of cross-correlation is carried out with all candidates except those cells to be cancelled.

The technique of the present invention can eliminate false detections whilst retaining sensitivity. It can effectively reject those false cell detections to reduce processing latency and power consumption due to unnecessary NPBCH decoding. It can also increase the detection ratio of weak cells which are covered up by interference from strong cells.

The approach described above can avoid performing any data demodulation. The multiple cancellation iterations can improve at the receiver (a) the determination of what transmitted NSSS signals are present in the received signal and (b) the channel estimate associated with each of the transmitted NSSS signals.

In the preferred implementation described above, cancellation of the two strongest cells is performed to achieve a balance between algorithm complexity and performance. However, the technique is not limited to the cancellation of two cells. More than two cells may be cancelled, which may further improve performance.

A greater number of iterations, or a multiple cell number hypothesis, may also be used to remove the effects of the strong cells.

Similar ideas can be applied for PSS detection or data decoding.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. In view of the foregoing description it will be evident to a person skilled in the art that various modifications may be made within the scope of the invention as defined by the appended claims.

## Claims

1. A signal receiver (104) for communicating with one of a plurality of transmitters (101, 102, 103), the receiver being configured for receiving a narrowband Internet of Things, NB-loT, signal and to adapt for communication with a transmitter (101, 102, 103), said receiver (104) being further configured to:
estimate (501), for each of multiple transmitters (101, 102, 103), a respective training signal;
receive (502) a segment of signal on a channel;
form (503) a list comprising at least one of the training signals;
for each training signal in that list, estimate (504) the channel response for a signal on the channel from the transmitter (101, 102, 103) associated with that training signal, and thereby estimate a signal on the channel from that transmitter (101, 102, 103);
estimate (505) a processed received signal by cancelling from the received signal a contribution corresponding to the or each training signal;
determine (506), for a subset of the training signals, the strength of a cross-correlation in the frequency domain between the processed received signal and the respective training signal, and
determine whether the strength of the cross-correlation in the frequency domain between the received signal and the respective training signal exceeds a threshold comprising determining whether the ratio between: (i) the amplitude of cross-correlation in the frequency domain between the received signal and the respective training signal and (ii) the mean amplitude of cross-correlation in the frequency domain between the received signal and each of the respective training signals exceeds a predetermined threshold.

2. The signal receiver (104) as claimed in claim 1, wherein the segment of signal is a subframe of the signal.

3. The signal receiver (104) as claimed in any one of claims 1 or 2, the receiver being configured to, if the threshold is exceeded in respect of a training signal, store the identity of the transmitter (101, 102, 103) associated with that training signal.

4. The signal receiver (104) as claimed in any one of claims 1 to 3, wherein the receiver is configured to, if the threshold is exceeded in respect of two of the training signals:
a. estimate the channel response of signals on the channel from each transmitter (101, 102, 103) associated with those two training signals, and thereby estimate signals on the channel from those transmitters (101, 102, 103);
b. form the processed received signal by cancelling both the estimated signals from the received signal; and
c. determine, for a subset of the training signals, the strength of a cross-correlation in the frequency domain between the processed received signal and the respective training signal.

5. The signal receiver (104) as claimed in claim 4, wherein the receiver is configured to form the processed received signal by:
a. forming a first intermediate processed received signal by cancelling the estimated channel response of a stronger one of the transmitters (101, 102, 103) associated with those two training signals;
b. estimating the channel response of signals on the channel from the weaker one of those transmitters (101, 102, 103) in dependence on the first intermediate processed received signal, and thereby estimating a signal on the channel from that transmitter (101, 102, 103); and
c. forming a second intermediate processed received signal by cancelling the estimated signal from the weaker one of the transmitters (101, 102, 103) from the received signal.

6. The signal receiver (104) as claimed in claim 5, wherein the receiver is configured to treat the second intermediate processed received signal as the said processed received signal.

7. The signal receiver (104) as claimed in any one of claims 1 to 6, wherein the said subset of the training signals excludes the or each training signals associated with a transmitter (101, 102, 103) in respect of which an estimated signal has been cancelled.

8. The signal receiver (104) as claimed in any one of claims 1 to 7, wherein the receiver is configured to, having determined (506), for a subset of the training signals, the strength of a cross-correlation in the frequency domain between the processed received signal and the respective training signal, select in dependence on that determination one of the transmitters (101, 102, 103) associated with the members of the subset and thereupon communicate with that transmitter (101, 102, 103).

9. The signal receiver (104) as claimed in any one of claims 1 to 8, wherein the receiver is configured to perform transmitter (101, 102, 103) detection on the processed received signal by use of a non-coherent integration cross-correlation metric.

10. The signal receiver (104) as claimed in claim 9, wherein the receiver is configured to select one of the transmitters (101, 102, 103) in dependence on an output of the metric and to thereupon communicate with that transmitter (101, 102, 103).

11. The signal receiver (104) as claimed in any one of claims 1 to 10, the signal receiver (104) being configured to, for each of the training signals, estimate whether the strength of a cross-correlation between the received signal and the respective training signal exceeds a threshold; and
if that threshold is exceeded in respect of a training signal to add that signal to the said list.

12. A method for operating a signal receiver (104) to communicate with one of a plurality of transmitters (101, 102, 103), wherein the signal receiver (104) is configured for receiving a narrowband Internet of Things, NB-loT, signal, the method comprising:
estimating (501), for each of multiple transmitters (101, 102, 103), a respective training signal;
receiving (502) a segment of signal on a channel;
forming (503) a list comprising at least one of the training signals;
for each training signal in that list, estimating (504) the channel response for a signal on the channel from the transmitter (101, 102, 103) associated with that training signal, and thereby estimating a signal on the channel from that transmitter (101, 102, 103);
estimating (505) a processed received signal by cancelling from the received signal a contribution corresponding to the or each training signal; and
determining (506), for a subset of the training signals, the strength of a cross-correlation in the frequency domain between the processed received signal and the respective training signal, and
determining whether the strength of the cross-correlation in the frequency domain between the received signal and the respective training signal exceeds a threshold comprising determining whether the ratio between: (i) the amplitude of cross-correlation in the frequency domain between the received signal and the respective training signal and (ii) the mean amplitude of cross-correlation in the frequency domain between the received signal and each of the respective training signals exceeds a predetermined threshold.

13. A computer program comprising instructions which, when the program is executed by a computer, cause the computer to carry out the method of claim 12.

## Patentansprüche

1. Signalempfänger (104) zum Kommunizieren mit einem einer Vielzahl von Sendern (101, 102, 103), wobei der Empfänger konfiguriert ist zum Empfangen eines Schmalband-Internet-der-Dinge- bzw. NB-IoT-Signals und zum Anpassen für Kommunikation mit einem Sender (101, 102, 103), wobei der Empfänger (104) ferner konfiguriert ist zum:
Schätzen (501), für jeden von mehreren Sendern (101, 102, 103), eines jeweiligen Trainingssignals;
Empfangen (502) eines Signalsegments in einem Kanal;
Bilden (503) einer Liste, umfassend mindestens eines der Trainingssignale;
für jedes Trainingssignal in dieser Liste Schätzen (504) der Kanalantwort für ein Signal in dem Kanal von dem Sender (101, 102, 103), der mit diesem Trainingssignal assoziiert ist, und dadurch Schätzen eines Signals in dem Kanal von diesem Sender (101, 102, 103);
Schätzen (505) eines verarbeiteten empfangenen Signals durch Auslöschen eines Beitrags korrespondierend mit dem oder jedem Trainingssignal aus dem empfangenen Signal;
Bestimmen (506), für eine Teilmenge der Trainingssignale, der Stärke einer Kreuzkorrelation in der Frequenzdomäne zwischen dem verarbeiteten empfangenen Signal und dem jeweiligen Trainingssignal, und
Bestimmen, ob die Stärke der Kreuzkorrelation in der Frequenzdomäne zwischen dem empfangenen Signal und dem jeweiligen Trainingssignal einen Schwellenwert übersteigt, umfassend Bestimmen, ob das Verhältnis zwischen: (i) der Amplitude der Kreuzkorrelation in der Frequenzdomäne zwischen dem empfangenen Signal und dem jeweiligen Trainingssignal und (ii) der mittleren Amplitude der Kreuzkorrelation in der Frequenzdomäne zwischen dem empfangenen Signal und jedem der jeweiligen Trainingssignale einen im Voraus bestimmten Schwellenwert übersteigt.

2. Signalempfänger (104) nach Anspruch 1, wobei das Signalsegment ein Teilrahmen des Signals ist.

3. Signalempfänger (104) nach einem der Ansprüche 1 oder 2, wobei der Empfänger konfiguriert ist zum, wenn der Schwellenwert in Bezug auf ein Trainingssignal überstiegen wird, Speichern der Identität des Senders (101, 102, 103), der mit diesem Trainingssignal assoziiert ist.

4. Signalempfänger (104) nach einem der Ansprüche 1 bis 3, wobei der Empfänger konfiguriert ist zum, wenn der Schwellenwert in Bezug auf zwei der Trainingssignale überstiegen wird:
a. Schätzen der Kanalantwort von Signalen in dem Kanal von jedem Sender (101, 102, 103), der mit diesen zwei Trainingssignalen assoziiert ist, und dadurch Schätzen von Signalen in dem Kanal von diesen Sendern (101, 102, 103);
b. Bilden des verarbeiteten empfangenen Signals durch Auslöschen beider der geschätzten Signale aus dem empfangenen Signal; und
c. Bestimmen, für eine Teilmenge der Trainingssignale, der Stärke einer Kreuzkorrelation in der Frequenzdomäne zwischen dem verarbeiteten empfangenen Signal und dem jeweiligen Trainingssignal.

5. Signalempfänger (104) nach Anspruch 4, wobei der Empfänger konfiguriert ist zum Bilden des verarbeiteten empfangenen Signals durch:
a. Bilden eines ersten zwischenliegenden verarbeiteten empfangenen Signals durch Auslöschen der geschätzten Kanalantwort eines stärkeren einen der Sender (101, 102, 103), der mit diesen zwei Trainingssignalen assoziiert ist;
b. Schätzen der Kanalantwort von Signalen in dem Kanal von dem schwächeren einen dieser Sender (101, 102, 103) in Abhängigkeit von dem ersten zwischenliegenden verarbeiteten empfangenen Signal und dadurch Schätzen eines Signals in dem Kanal von diesem Sender (101, 102, 103); und
c. Bilden eines zweiten zwischenliegenden verarbeiteten empfangenen Signals durch Auslöschen des geschätzten Signals von dem schwächeren einen der Sender (101, 102, 103) aus dem empfangenen Signal.

6. Signalempfänger (104) nach Anspruch 5, wobei der Empfänger konfiguriert ist, das zweite zwischenliegende verarbeitete empfangene Signal als das verarbeitete empfangene Signal zu behandeln.

7. Signalempfänger (104) nach einem der Ansprüche 1 bis 6, wobei die Teilmenge der Trainingssignale das oder jedes Trainingssignal ausschließt, das mit einem Sender (101, 102, 103) assoziiert ist, in Bezug auf den ein geschätztes Signal ausgelöscht wurde.

8. Signalempfänger (104) nach einem der Ansprüche 1 bis 7, wobei der Empfänger konfiguriert ist zum, nachdem er für eine Teilmenge der Trainingssignale die Stärke einer Kreuzkorrelation in der Frequenzdomäne zwischen dem verarbeiteten empfangenen Signal und dem jeweiligen Trainingssignal bestimmt (506) hat, Auswählen, in Abhängigkeit von dieser Bestimmung, eines der Sender (101, 102, 103), der mit den Elementen der Teilmenge assoziiert ist, und danach Kommunizieren mit diesem Sender (101, 102, 103).

9. Signalempfänger (104) nach einem der Ansprüche 1 bis 8, wobei der Empfänger konfiguriert ist zum Durchführen von Detektion von Sendern (101, 102, 103) an dem verarbeiteten empfangenen Signal durch die Verwendung einer nichtkohärenten Integration-Kreuzkorrelationsmetrik.

10. Signalempfänger (104) nach Anspruch 9, wobei der Empfänger konfiguriert ist zum Auswählen eines der Sender (101, 102, 103) in Abhängigkeit von einer Ausgabe der Metrik und danach zum Kommunizieren mit diesem Sender (101, 102, 103).

11. Signalempfänger (104) nach einem der Ansprüche 1 bis 10, wobei der Signalempfänger (104) konfiguriert ist zum, für jedes der Trainingssignale, Schätzen, ob die Stärke einer Kreuzkorrelation zwischen dem empfangenen Signal und dem jeweiligen Trainingssignal einen Schwellenwert übersteigt; und
wenn dieser Schwellenwert in Bezug auf ein Trainingssignal überstiegen wird, zum Hinzufügen dieses Signals zu der Liste.

12. Verfahren zum Betreiben eines Signalempfängers (104) zum Kommunizieren mit einem einer Vielzahl von Sendern (101, 102, 103), wobei der Signalempfänger (104) konfiguriert ist zum Empfangen eines Schmalband-Internet-der-Dinge- bzw. NB-IoT-Signals, das Verfahren umfassend:
Schätzen (501), für jeden von mehreren Sendern (101, 102, 103), eines jeweiligen Trainingssignals;
Empfangen (502) eines Signalsegments in einem Kanal;
Bilden (503) einer Liste, umfassend mindestens eines der Trainingssignale;
für jedes Trainingssignal in dieser Liste Schätzen (504) der Kanalantwort für ein Signal in dem Kanal von dem Sender (101, 102, 103), der mit diesem Trainingssignal assoziiert ist, und dadurch Schätzen eines Signals in dem Kanal von diesem Sender (101, 102, 103);
Schätzen (505) eines verarbeiteten empfangenen Signals durch Auslöschen eines Beitrags korrespondierend mit dem oder jedem Trainingssignal aus dem empfangenen Signal; und
Bestimmen (506), für eine Teilmenge der Trainingssignale, der Stärke einer Kreuzkorrelation in der Frequenzdomäne zwischen dem verarbeiteten empfangenen Signal und dem jeweiligen Trainingssignal, und
Bestimmen, ob die Stärke der Kreuzkorrelation in der Frequenzdomäne zwischen dem empfangenen Signal und dem jeweiligen Trainingssignal einen Schwellenwert übersteigt, umfassend Bestimmen, ob das Verhältnis zwischen: (i) der Amplitude der Kreuzkorrelation in der Frequenzdomäne zwischen dem empfangenen Signal und dem jeweiligen Trainingssignal und (ii) der mittleren Amplitude der Kreuzkorrelation in der Frequenzdomäne zwischen dem empfangenen Signal und jedem der jeweiligen Trainingssignale einen im Voraus bestimmten Schwellenwert übersteigt.

13. Computerprogramm, umfassend Anweisungen, die, wenn das Programm durch einen Computer ausgeführt wird, den Computer veranlassen, das Verfahren nach Anspruch 12 auszuführen.

## Revendications

1. Récepteur de signaux (104) pour communiquer avec un émetteur d'une pluralité d'émetteurs (101, 102, 103), le récepteur étant configuré pour recevoir un signal de l'Internet des objets à bande étroite (NB-IoT) et pour s'adapter à une communication avec un émetteur (101, 102, 103), ledit récepteur (104) étant en outre configuré pour :
estimer (501), pour chaque émetteur d'une pluralité d'émetteurs (101, 102, 103), un signal de formation respectif ;
recevoir (502) un segment de signal sur un canal ;
produire (503) une liste comprenant au moins un des signaux de formation ;
pour chaque signal de formation de cette liste, estimer (504) la réponse de canal pour un signal sur le canal en provenance de l'émetteur (101, 102, 103) associé à ce signal de formation, et estimer ainsi un signal sur le canal provenant de cet émetteur (101, 102, 103) ;
estimer (505) un signal reçu traité en annulant du signal reçu une contribution correspondant au signal de formation ou à chaque signal de formation ;
déterminer (506), pour un sous-ensemble des signaux de formation, l'intensité d'une corrélation croisée dans le domaine fréquentiel entre le signal reçu traité et le signal de formation respectif ; et
déterminer si l'intensité de la corrélation croisée dans le domaine fréquentiel entre le signal reçu et le signal de formation respectif dépasse un seuil, ce qui consiste à déterminer si le rapport entre : (i) l'amplitude de la corrélation croisée dans le domaine fréquentiel entre le signal reçu et le signal de formation respectif et (ii) l'amplitude moyenne de la corrélation croisée dans le domaine fréquentiel entre le signal reçu et chacun des signaux de formation respectifs dépasse un seuil prédéterminé.

2. Récepteur de signaux (104) selon la revendication 1, dans lequel le segment de signal est une sous-trame du signal.

3. Récepteur de signaux (104) selon l'une quelconque des revendications 1 et 2, le récepteur étant configuré pour stocker, si le seuil est dépassé pour un signal de formation, l'identité de l'émetteur (101, 102, 103) associé à ce signal de formation.

4. Récepteur de signaux (104) selon l'une quelconque des revendications 1 à 3, le récepteur étant configuré pour, si le seuil est dépassé pour deux des signaux de formation :
a. estimer la réponse de canal de signaux sur le canal en provenance de chaque émetteur (101, 102, 103) associé à ces deux signaux de formation, et estimer ainsi des signaux sur le canal en provenance de ces émetteurs (101, 102, 103) ;
b. produire le signal reçu traité en annulant les deux signaux estimés du signal reçu ; et
c. déterminer, pour un sous-ensemble des signaux de formation, l'intensité d'une corrélation croisée dans le domaine fréquentiel entre le signal reçu traité et le signal de formation respectif.

5. Récepteur de signaux (104) selon la revendication 4, le récepteur étant configuré pour former le signal reçu traité en réalisant les étapes consistant à :
a. produire un premier signal reçu traité intermédiaire en annulant la réponse de canal estimée d'un émetteur le plus puissant des émetteurs (101, 102, 103) associés à ces deux signaux de formation ;
b. estimer la réponse de canal de signaux sur le canal du plus faible de ces émetteurs (101, 102, 103) en fonction du premier signal reçu traité intermédiaire, et estimer ainsi un signal émis sur le canal en provenance de cet émetteur (101, 102, 103) ; et
c. produire un second signal reçu traité intermédiaire en annulant du signal reçu le signal estimé du plus faible des émetteurs (101, 102, 103).

6. Récepteur de signaux (104) selon la revendication 5, le récepteur étant configuré pour traiter le second signal reçu traité intermédiaire comme ledit signal reçu traité.

7. Récepteur de signaux (104) selon l'une quelconque des revendications 1 à 6, dans lequel ledit sous-ensemble des signaux de formation exclut le signal de formation ou chaque signal de formation associé à un émetteur (101, 102, 103) pour lequel un signal estimé a été annulé.

8. Récepteur de signaux (104) selon l'une quelconque des revendications 1 à 7, le récepteur étant configuré pour sélectionner, après la détermination (506), pour un sous-ensemble des signaux de formation, de l'intensité d'une corrélation croisée dans le domaine fréquentiel entre le signal reçu traité et le signal de formation respectif, en fonction de cette détermination, un des émetteurs (101, 102, 103) associés aux membres du sous-ensemble et pour communiquer alors avec cet émetteur (101, 102, 103).

9. Récepteur de signaux (104) selon l'une quelconque des revendications 1 à 8, le récepteur étant configuré pour effectuer une détection de l'émetteur (101, 102, 103) sur le signal reçu traité en utilisant un indicateur métrique de corrélation croisée d'intégration non cohérente.

10. Récepteur de signaux (104) selon la revendication 9, le récepteur étant configuré pour sélectionner un des émetteurs (101, 102, 103) en fonction d'une sortie de l'indicateur métrique et pour communiquer alors avec cet émetteur (101, 102, 103).

11. Récepteur de signaux (104) selon l'une quelconque des revendications 1 à 10, le récepteur de signaux (104) étant configuré pour estimer, pour chacun des signaux de formation, si l'intensité d'une corrélation croisée entre le signal reçu et le signal de formation respectif dépasse un seuil ; et
si ce seuil est dépassé pour un signal d'apprentissage, pour ajouter ce signal à ladite liste.

12. Procédé permettant de faire fonctionner un récepteur de signaux (104) pour communiquer avec un émetteur d'une pluralité d'émetteurs (101, 102, 103), le récepteur de signaux (104) étant configuré pour recevoir un signal de l'Internet des objets à bande étroite (NB-IoT), le procédé comprenant les étapes consistant à :
estimer (501), pour chaque émetteur d'une pluralité d'émetteurs (101, 102, 103), un signal de formation respectif ;
recevoir (502) un segment de signal sur un canal ;
produire (503) une liste comprenant au moins un des signaux de formation ;
pour chaque signal de formation de cette liste, estimer (504) la réponse de canal pour un signal sur le canal en provenance de l'émetteur (101, 102, 103) associé à ce signal de formation, et estimer ainsi un signal sur le canal provenant de cet émetteur (101, 102, 103) ;
estimer (505) un signal reçu traité en annulant du signal reçu une contribution correspondant au signal de formation ou à chaque signal de formation ; et
déterminer (506), pour un sous-ensemble des signaux de formation, l'intensité d'une corrélation croisée dans le domaine fréquentiel entre le signal reçu traité et le signal de formation respectif, et
déterminer si l'intensité de la corrélation croisée dans le domaine fréquentiel entre le signal reçu et le signal de formation respectif dépasse un seuil, ce qui consiste à déterminer si le rapport entre : (i) l'amplitude de la corrélation croisée dans le domaine fréquentiel entre le signal reçu et le signal de formation respectif et (ii) l'amplitude moyenne de la corrélation croisée dans le domaine fréquentiel entre le signal reçu et chacun des signaux de formation respectifs dépasse un seuil prédéterminé.

13. Programme informatique comprenant des instructions qui, lorsque le programme est exécuté par un ordinateur, amènent l'ordinateur à réaliser le procédé selon la revendication 12.
